# EUROPÄISCHE PATENTSCHRIFT

(11) **EP 1 543 915 B1**
(45) Veröffentlichungstag und Bekanntmachung des Hinweises auf die Patenterteilung: **26.03.2008**
(21) Anmeldenummer: 03028835.1
(22) Anmeldetag: 16.12.2003
(51) Int. Cl.: B23K 26/42, B23K 26/14, B25J 19/06

(54) **Kollisionsschutzeinrichtung eines Laserbearbeitungskopfes**
Collision protection device of a laser machining head
Dispositif de protection contre les collisions d'une tête d'usinage au laser

(43) Veröffentlichungstag der Anmeldung: 22.06.2005
(73) Patentinhaber: TRUMPF Werkzeugmaschinen GmbH + Co. KG, 71254 Ditzingen (DE)
(72) Erfinder: Baur, Jan, 70771 Lainfelden-Echterdingen (DE); Link, Gerhard, 75438 Knittlingen (DE)
(74) Vertreter: Kohler Schmid Möbus

(56) Entgegenhaltungen:
- DE-A- 3 523 887
- DE-C- 19 701 516
- US-A- 5 160 824
- US-A1- 2003 116 540

## Beschreibung

Die Erfindung betrifft eine Laserbearbeitungsmaschine gemäß dem Oberbegriff des Anspruchs 1.

Eine derartige Laserbearbeitungsmachine ist beispielsweise durch die US-A1-2003116540 bekannt geworden.

Eine Kollision des Laserbearbeitungskopfes mit dem Werkstück oder einer Vorrichtung darf zu keinen Schäden an der Maschine oder auch dem Werkstück führen. Eine Abweichung des Laserbearbeitungskopfes von seiner Solllage nach einer Kollision muß präzise erkannt werden. Das Wechseln des Bearbeitungskopfes soll komfortabel an derselben Schnittstelle möglich sein.

Bei der Einrichtung nach der Lehre nach der DE 35 23 887 C1 oder der DE 197 01 516 C1 ist eine zusätzliche Lageüberwachung notwendig. Die Zentrierung erfolgt mithilfe von Kugeln.

Der Anmelder hat sich die Aufgabe gestellt, die bekannte Kollisionsschutzeinrichtung weiter zu verbessern, insbesondere das Ansprechverhalten bei einer Kollision, die Lageüberwachung des Laserbearbeitungskopfes und die Handhabung während der Kupplung.

Erfindungsgemäß wird zur Lösung der Aufgabe eine Laserbearbeitungsmaschine gemäss dem Anspruch 1 vorgeschlagen. Diese Anordnung ist besonders vorteilhaft, weil die Zentrierungseinrichtung selbst Teil des elektrischen Stromkreises ist, der im Falle einer Kollision geöffnet wird. Dass die Zentriereinrichtung als Teil des elektrischen Stromkreises genutzt wird, ist im Übrigen nicht nur bei erfindungsgemäßen Zentriereinrichtungen von Vorteil, sondern auch bei beliebigen Zentriereinrichtungen, insbesondere auch bei den aus dem Stande der Technik bekannten Zentriereinrichtungen. Gemäß einer besonders vorteilhaften Ausführung der Erfindung ist die Kupplungsebene bei einer Kollisionsschutzeinrichtung der eingangs genannten Art senkrecht zur Werkstückoberfläche angeordnet. Das Lösen der Kupplung ist bei einer Kollision in nahezu jeder Kollisionsrichtung gewährleistet.

Gemäß einer Weiterbildung der Erfindung ist die Kupplung mithilfe eines Elektromagneten und mehrerer Dauermagnete herstellbar. Hierdurch wird eine hohe Haltekraft mit steilem Kraftabfall kombiniert, so dass bei einer Laserbearbeitung eine gute Halterung des Laserbearbeitungskopfes und bei einer Kollision ein schnelles Lösen des Laserbearbeitungskopfes erreicht wird.

Zur integrierten Lageüberwachung des Laserbearbeitungskopfes zusätzlich zum Lösen der Kupplung sind mit einer Steuerung der Laserbearbeitungsmaschine verbundene Mittel zum Öffnen und Schließen eines elektrischen Stromkreises bei einer Kollision vorgesehen.

In technischer Realisierung sind die Mittel zum Öffnen und Schließen des elektrischen Stromkreises durch zwischen Kegelstümpfen am Träger ein-setzbare am Laserbearbeitungskopf angeordnete Druckstücke wie zum Beispiel Walzen und/oder Kugeln und/oder Prismen ausgebildet.

Die Anordnung von drei Paaren von Kegelstümpfen an einem vorzugsweise ringförmigen Flansch des Trägers, zwischen denen jeweils eine Kugel einsetzbar ist, gewährleistet eine gute Zentrierung, eine gute Lageüberwachung und einen zuverlässigen Kollisionsschutz. Durch geeignete Wahl des Winkelabstandes der Paare von Kegelstümpfen können die Auslösekräfte derart beeinflusst werden, dass in allen Kollisionsrichtungen möglichst gleich große Kräfte wirken. Besonders vorteilhaft ist es, wenn ein erstes Paar von Kegelstümpfen an der der Werkstückoberfläche abgewandten Seite angeordnet ist und die beiden anderen Paare von Kegelstümpfen in einem Winkelabstand von etwa +135° bzw -135° angeordnet sind. Diese Anordnung ist bei allen dreiwertig gelagerten Zentriereinrichtungen sinnvoll, insbesondere auch bei den aus dem Stand der Technik bekannten.

Ein Ausführungsbeispiel der Erfindung ist in den Zeichnungen schematisch dargestellt, die nachfolgend erläutert werden. Es zeigt:
- **Fig. 1**: eine dreidimensionale Ansicht einer Kollisionsschutzeinrichtung einer Laserbearbeitungsmaschine;
- **Fig. 2**: die Kupplungsseite der Zentriereinrichtung in der Draufsicht;
- **Fig. 3**: einen Schnitt durch ein Paar erfindungsgemäßer Kegelstümpfe bei angekuppelter Jochplatte.

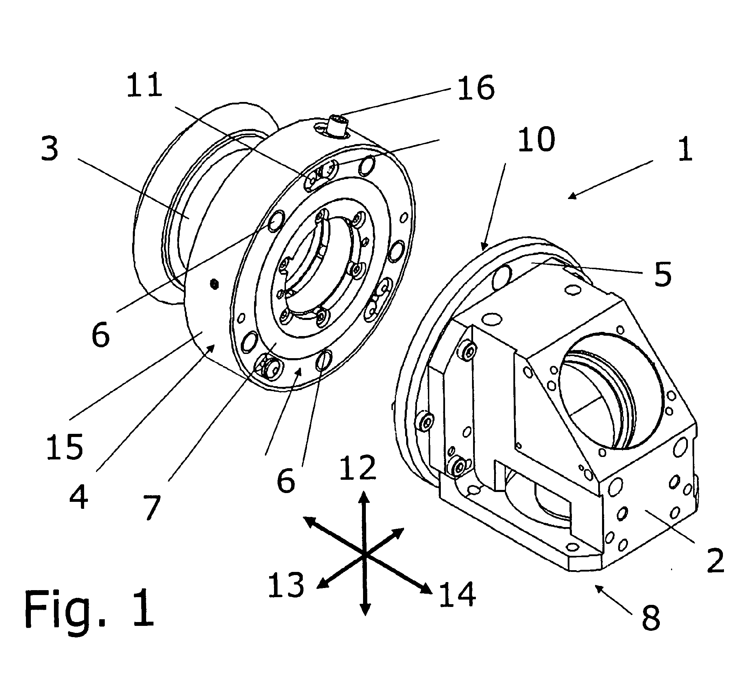

Aus der **Figur 1** ist der Aufbau einer Kollisionsschutzeinrichtung **1** einer Laserbearbeitungsmaschine ersichtlich. Die Kollisionsschutzeinrichtung 1 umfasst die lösbare Kupplung eines Laserbearbeitungskopfes **2** an einen Träger **3** der Laserbearbeitungsmaschine. Die Kupplung besteht im Wesentlichen aus einem Flansch **4**, an welchem eine mit dem Laserbearbeitungskopf 2 fest verbundene Jochplatte **5** gehaltert werden kann, und Mitteln zur ortsfesten, aber lösbaren Halterung.

Der Laserbearbeitungskopf 2 kann an dem Flansch 4 mithilfe eines zuschaltbaren ringförmigen Elektromagneten **7** und mehrerer kreisförmiger Dauermagnete **6** sicher gehalten werden. Die statische Haltekraft gegen die Gewichtskraft wird durch die Dauermagnete 6 aufgebracht. Die dynamisch erforderliche Haltekraft wird durch den Elektromagneten 7 aufgebracht. Magnetische Kräfte erfüllen die Forderung hoher Haltekraft (500 N) mit steilem Kraftabfall ideal, so dass ein Lösen der Kupplung bei einer Kollision des Laserbearbeitungskopfes 3 an dem Werkstück in nahezu jeder Raumrichtung möglich ist.

Beim Wechsel des Laserbarbeitungskopfes 2 müssen keine (mechanischen) Teile eingehängt werden. Die elektromagnetische Kraft wird nur im Betrieb benötigt und zum Wechsel abgeschaltet, was einen komfortablen Wechsel ermöglicht.

Die Lage des Laserbearbeitungskopfes 2 ist bei der Montage präzise reproduzierbar. Eine Abweichung von der Solllage kann mit einer hohen Auflösung erkannt werden (ca. 0,2mm). Bei einer Kollision kann der Laserbearbeitungskopf 2 und somit die sich an seiner Unterseite **8** befindende in der Figur nicht gezeigte Laserbearbeitungsdüse des Laserbearbeitungskopfes 2 in alle drei Raumrichtungen kraftbegrenzt ausweichen. Zur Abstastung des Werkstücks wird das von Koordinatenmessmaschinen bekannte Prinzip des schaltenden Tastkopfes verwendet.

Die durch die eine Kupplungsseite **9** des Flanschs 4 bzw. die andere Kupplungsseite **10** der Jochplatte 5 definierte Kupplungsebene ist senkrecht zur Werkstückoberfläche angeordnet und zur Laserbearbeitungsdüse beabstandet. Die Lager werden durch drei Druckstücke an der Jochplatte 5 und durch sechs Kegelstümpfe **11** als Zentriereinrichtung an dem Flansch 4 ausgebildet. Durch ein mögliches Herausgleiten der Druckstücke aus dem Freiraum zwischen den Kegelstümpfen 11 wird ein Auslenken oder Ausweichen senkrecht zur Werkstückoberfläche in Doppelpfeilrichtung **12**, parallel zur Werkstückoberfläche in Doppelpfeilrichtung **13** und in Doppelpfeilrichtung **14** und in Überlagerung dieser Richtungen ermöglicht. Die Anlagepunkte der Druckstücke an den Kegelstümpfen 11 sind elektrisch in Reihe geschaltet, solange alle drei Druckstücke an den Kegelstümpfen 11 anliegen und schließen dadurch einen Stromkreis. Sobald aber eine dieser Kugeln in Folge einer Kollision abgehoben wird, wird der Stromkreis unterbrochen. Dies wird von der Steuerung der Laserbearbeitungsmaschine erkannt. Die Laserbearbeitung wird gestoppt.

Um die Lage dauerhaft reproduzierbar zu erhalten, werden die Lagerstellen aus gehärtetem Stahl ausgeführt. Zur elektrischen Isolation untereinander und gegenüber der Maschinenmasse sind sie in harteloxierten Aufnahmen aus Aluminium geführt.

Die Strahlführung wird gegenüber der Umgebung durch eine Manschette **15** abgedichtet. Diese ist aus einem magnetischen Werkstoff und wird durch die Magnetkraft an die Jochplatte gezogen, verbessert dabei den magnetischen Fluss ohne das Abgleiten zu behindern.

An Stelle der Ausführung mit Dauer- und Elektromagneten, kann auch eine Ausführung mit Hybridmagneten, nur mit Elektromagnet und remanenter statischer Haltekraft oder nur mit Dauermagneten gewählt werden. Werden nur Dauermagnete verwendet, so kann die Magnetkraft beim Wechsel des Laserbearbeitungskopfes mittels einer Abdrückvorrichtung überwunden werden. Dies kann in Form einer um die Kupplungsachse drehbaren Gleitkulisse und Abdrückstiften gestaltet werden. Die Abdrückstifte dienen gleichzeitig als Vorführung beim Aufsetzen des Laserbearbeitungskopfes. Zum Erzeugen des Drehmomentes ist ein Hebel an der Kulisse vorgesehen, der auch in Form eines Hakenschlüssels abnehmbar ausgeführt werden kann.

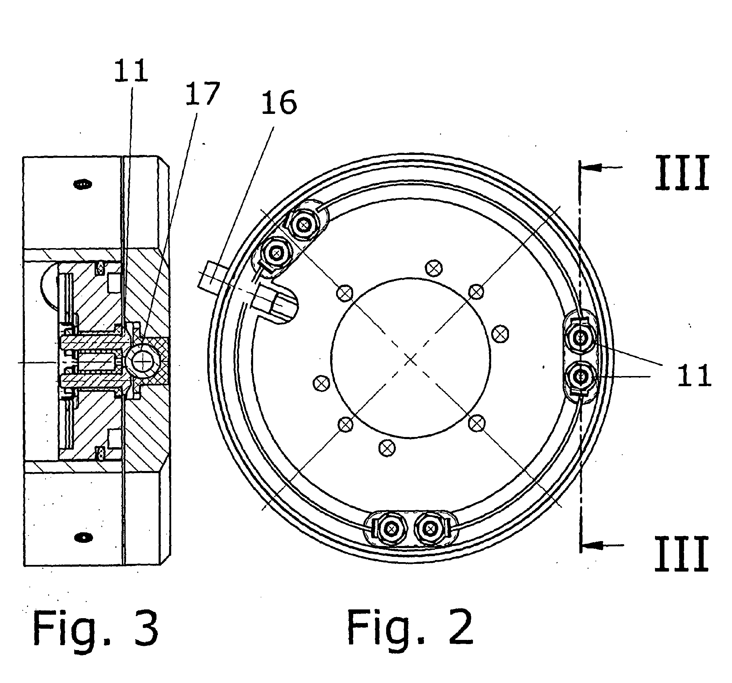

**Fig. 2** zeigt die Kupplungsseite der Zentriereinrichtung in der Draufsicht. **Fig. 3** zeigt einen Schnitt durch ein Paar erfindungsgemäßer Kegelstümpfe 11 bei angekuppelter Jochplatte gemäß der Linie III-III in Fig. 2. Zwischen den beiden Kegelstümpfen 11 besteht durch das eingreifende Druckstück **17** elektrischer Kontakt. Wird das Druckstück 17 in Folge einer Kollision abgehoben, wird der Stromkreis unterbrochen, die Verbindung zu einer Stromversorgung wird über den Steckverbinder 16 hergestellt.

In Fig. 2 ist die Anordnung von drei Paaren von Kegelstümpfen 11 erkennbar: ein erstes Paar von Kegelstümpfen 11 ist an der der Werkstückoberfläche abgewandten Seite (neben dem Steckverbinder 16) angeordnet. Die beiden anderen Paare sind vom ersten Paar um +135° bzw. -135° angeordnet. Diese Anordnung trägt der Tatsache Rechnung, dass die Länge des angreifenden Hebels im Falle einer Kollision von der Kollisionsrichtung abhängt.

### BEZUGSZEICHENLISTE

- 1: Kollisionsschutzeinrichtung
- 2: Laserbearbeitungskopf
- 3: Träger
- 4: Flansch
- 5: Jochplatte
- 6: Dauermagnet
- 7: Elektromagnet
- 8: Unterseite
- 9: Kupplungsseite
- 10: Kupplungsseite
- 11: Kegelstumpf
- 12: Auslenkrichtung
- 13: Auslenkrichtung
- 14: Auslenkrichtung
- 15: Manschette
- 16: Steckverbinder
- 17: Druckstück

## Patentansprüche

1. Laserbearbeitungsmaschine mit einem Laserbearbeitungskopf und einer Kollisionsschutzeinrichtung (1) eines Laserbearbeitungskopfes (2) einer Laserbearbeitungsmaschine, umfassend eine lösbare Kupplung dieses Laserbearbeitungskopfes (2) an einen Träger (3) und eine Zentriereinrichtung zur Zentrierung während der Kupplung, wobei die Zentriereinrichtung durch Kegelstümpfe (11) ausgebildet ist, **dadurch gekennzeichnet, dass** an der Kollisionsschutzeinrichtung drei Paare von Kegelstümpfen (11) angeordnet sind, zwischen denen jeweils ein Druckstück (17) einsetzbar ist.

2. Laserbearbeitungsmaschine nach Anspruch 1, **dadurch gekennzeichnet, dass** die Kupplungsebene der Kupplung senkrecht zur Werkstückoberfläche angeordnet ist.

3. Laserbearbeitungsmaschine nach Anspruch 1 oder 2, **dadurch gekennzeichnet, dass** die Kupplung mithilfe eines Elektromagneten (7) und mehrerer Dauermagnete (6) herstellbar ist.

4. Laserbearbeitungsmaschine nach einem der vorhergehenden Ansprüche, **dadurch gekennzeichnet, dass** mit einer Steuerung der Laserbearbeitungsmaschine verbundene Mittel zum Öffnen und Schließen eines elektrischen Stromkreises bei einer Kollision vorgesehen sind.

5. Laserbearbeitungsmaschine nach Anspruch 4, **dadurch gekennzeichnet, dass** die Mittel zum Öffnen und Schließen des elektrischen Stromkreises durch zwischen den Kegelstümpfen (11) am Träger (3) einsetzbare am Laserbearbeitungskopf angeordnete Druckstücke (17) ausgebildet sind.

6. Laserbearbeitungsmaschine Anspruch 1, **dadurch gekennzeichnet, dass** ein erstes Paar von Kegelstümpfen (11) an der dem Werkstück abgewandten Seite angeordnet ist und die beiden anderen Paare in einem Winkalabstand von etwa +135° bzw -135° angeordnet sind.

## Claims

1. Laser processing machine with a laser processing head and a collision protection means (1) of a laser processing head (2) of a laser processing machine, comprising a detachable coupling of this laser processing head (2) to a carrier (3), and a centering means for centering during coupling, wherein the centering means is formed by truncated cones (11), **characterized in that** three pairs of truncated cones (11) are disposed on the collision protection means, with one pressure piece (17) being insertable between each pair.

2. Laser processing machine according to claim 1, **characterized in that** the coupling plane of the coupling is disposed perpendicularly to the workpiece surface.

3. Laser processing machine according to claim 1 or 2, **characterized in that** the coupling can be produced by means of an electromagnet (7) and several permanent magnets (6).

4. Laser processing machine according to any one of the preceding claims, **characterized in that** means are provided for opening and closing an electric circuit during collision, the means being connected to the laser processing machine control.

5. Laser processing machine according to claim 4, **characterized in that** the means for opening and closing the electric circuit are formed by pressure pieces (17) that are provided on the laser processing head and can be inserted between the truncated cones (11) on the carrier (3).

6. Laser processing machine according to claim 1, **characterized in that** a first pair of truncated cones (11) is disposed on the side facing away from the workpiece and the two other pairs are disposed at an angular separation of approximately +135° or -135°.

## Revendications

1. Machine d'usinage au laser comportant une tête d'usinage au laser et un dispositif de protection contre les collisions (1) d'une tête d'usinage au laser (2) d'une machine d'usinage au laser, comprenant un accouplement détachable de cette tête d'usinage au laser (2) sur un support (3) et un dispositif de centrage permettant le centrage pendant l'accouplement, le dispositif de centrage étant formé par des cônes tronqués (11), **caractérisée en ce que** trois paires de cônes tronqués (11), entre lesquelles un élément de pression (17) peut chaque fois être mis en place, sont disposées sur le dispositif de protection contre les collisions.

2. Machine d'usinage au laser selon la revendication 1, **caractérisée en ce que** le plan d'accouplement de l'accouplement est disposé perpendiculairement à la surface de la pièce.

3. Machine d'usinage au laser selon la revendication 1 ou 2, **caractérisée en ce que** l'accouplement est réalisable à l'aide d'un électroaimant (7) et de plusieurs aimants permanents (6).

4. Machine d'usinage au laser selon l'une des revendications précédentes, **caractérisée en ce que** des moyens reliés à une commande de la machine d'usinage au laser sont prévus pour ouvrir et fermer un circuit électrique lors d'une collision.

5. Machine d'usinage au laser selon la revendication 4, **caractérisée en ce que** les moyens pour ouvrir et fermer le circuit électrique sont formés par des éléments de pression (17) disposés sur la tête d'usinage au laser qui peuvent être mis en place entre les cônes tronqués (11) sur le support (3).

6. Machine d'usinage au laser selon la revendication 1, **caractérisée en ce qu'**une première paire de cônes tronqués (11) est disposée du côté opposé à la pièce et les deux autres paires sont respectivement disposées à une distance angulaire d'environ +135° et -135°.
